# EUROPEAN PATENT SPECIFICATION

(11) **EP 3 623 272 B1**
(45) Date of publication and mention of the grant of the patent: **09.02.2022**
(21) Application number: 17910267.8
(22) Date of filing: 11.09.2017
(51) Int. Cl.: B62K 15/00, B62K 3/00

(54) **FOLDING MECHANISM AND SCOOTER**
FALTMECHANISMUS UND SCOOTER
MÉCANISME DE PLIAGE ET TROTTINETTE

(30) Priority: 16.05.2017 CN 201710344909
(43) Date of publication of application: 18.03.2020
(73) Proprietor: Ninebot (Beijing) Tech Co., Ltd., Beijing 100192 (CN)
(72) Inventor: LOU, Yi, Beijing 100192 (CN); LIN, Ji, Beijing 100192 (CN); LI, Xingle, Beijing 100192 (CN)
(74) Representative: Regimbeau
(86) International application number: PCT/CN2017/101243
(87) International publication number: WO 2018/209849

(56) References cited:
- EP-A1- 0 764 109
- EP-A2- 1 138 586
- WO-A2-98/46474
- CN-A- 107 097 883
- CN-U- 204 659 899
- CN-U- 204 659 899
- CN-U- 206 243 351
- CN-U- 206 797 585
- DE-A1-102016 211 318
- US-A1- 2011 305 502
- US-B2- 8 720 918

## Description

### TECHNICAL FIELD

Embodiments of the present invention relate to the technical field of mechanical structures, and in particular to a folding mechanism and a scooter. The features of the preamble of the independent claims are known from CN204659899U, DE102016211318A1, EP0764109A1 and WO98/46474A2.

### BACKGROUND

A foldable scooter may be manually folded or unfolded without the need of an external tool during use. The foldable scooter has the advantages of convenient carrying, small occupation space and the like, and has gradually become a new generation of sports travel products.

In order to realize a folding function of the foldable scooter, a folding mechanism is usually disposed at a position such as a body or a handle. In the related art, there are two folding schemes: when folding, a rotary shaft is disposed above a front wheel for folding above the front wheel; and when folding, a rotary shaft is disposed behind a front wheel for folding behind the front wheel. Although the above two schemes realize folding of the scooter, the folded scooter is still large in size, is not convenient to carry or is not easy to store, which causes a poor user experience.

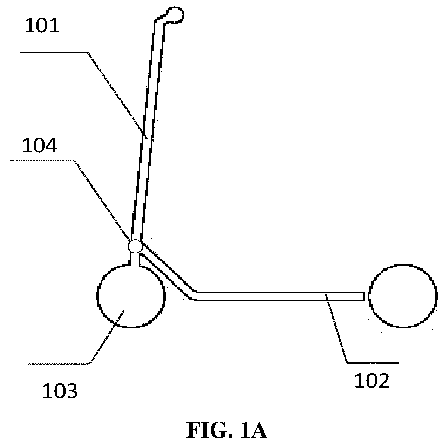

FIG. 1A is a structural schematic diagram of a folding mechanism in the related art. In an exemplary example, the folding mechanism may be applied to a scooter. The folding mechanism includes a first movable member 101, a second movable member 102, a folding shaft 104, and a wheel 103. The first movable member 101 may be reused as a front fork, and the second movable member may be reused as a footboard. The front fork is a part that connects the wheel to a handle of a vehicle.

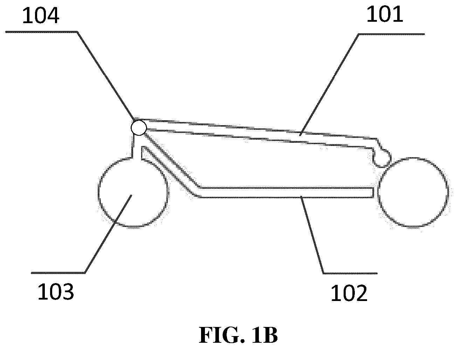

FIG. 1B is a state diagram of a folding mechanism of FIG. 1A in the related art after folding. As shown in the figure, the folding shaft 104 is disposed above the wheel 103. The first movable member 101 rotates around the folding shaft 104 such that the first movable member 101 and the second movable member 102 are folded toward each other around the folding shaft 104 as a pivot shaft.

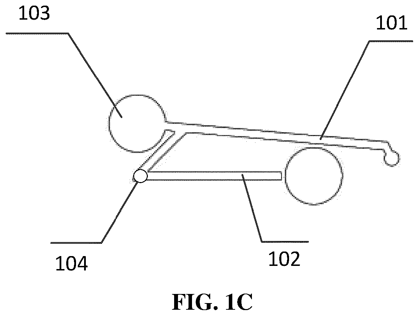

FIG. 1C is a state diagram of another folding mechanism in the related art after folding. As shown in the figure, the folding shaft 104 is disposed behind the wheel 103. The first movable member 101 may drive the wheel 103 to rotate around the folding shaft 104 such that the first movable member 101 and the second movable member 102 relative to one another around the folding shaft 104 as a pivot shaft to complete the folding of the first movable member 101 and the second movable member 102.

It can be seen from FIG. 1B and FIG. 1C that the existing two folding mechanisms still occupy a large space after the folding is completed. Because there is still a large space between the first movable member 101 and the second movable member 102 after the folding is completed, a close fit of the first movable member and the second movable member cannot be achieved.

Therefore, how to design a folding mechanism to be compact and portable after folding has become a technical problem to be urgently solved in the related art.

### SUMMARY

The present invention is defined in the independent claims. In view of the above problem, the present invention provides a folding mechanism, which overcomes the above problem or at least partially solves the above problem.

The embodiments of the present invention provide a folding mechanism, which may include: a first movable member, a second movable member, a ground contacting component, and a folding shaft passing through the ground contacting component.

The first movable member is provided with a first connecting end and is connected to the ground contacting component by the first connecting end.

The second movable member is provided with a second connecting end and is connected to the ground contacting component by the second connecting end.

The first movable member and the second movable member rotate relative to one another around the folding shaft as a pivot shaft to unfold or fold the folding mechanism.

In one embodiment of the present invention, the ground contacting component may be a wheel.

In one embodiment of the present invention, the folding mechanism may further include:
a steering mechanism, which is connected to the ground contacting component and the second connecting end respectively, to steer the second movable member when the ground contacting component is steered.

In one embodiment of the present invention, the ground contacting component is provided with a rotary shaft. The steering mechanism may be a steering bearing. An outer ring of the steering bearing may be connected to the rotary shaft of the ground contacting component, and an inner ring of the steering bearing may be connected to the second movable member by the folding shaft, to steer the second movable member when the ground contacting component is steered.

In one embodiment of the present invention, the rotary shaft of the ground contacting component may be disposed horizontally. An axis of the steering bearing may be disposed vertically. The first connecting end may be provided with a limiting hole. The folding shaft may sequentially pass through the ground contacting component and the limiting hole and then be connected to the second connecting end. The limiting hole may be configured to limit a steering range of the first connecting end when the first connecting end turns relative to the folding shaft around the axis of the steering bearing as a pivot shaft.

In one embodiment of the present invention, the limiting hole may be a flat limiting hole with a predetermined width.

In one embodiment of the present invention, the folding mechanism may further include: a fastening component, connecting the outer ring of the steering bearing to the rotary shaft of the ground contacting component, and connecting the inner ring of the steering bearing to the second movable member by the folding shaft.

In one embodiment of the present invention, the folding shaft may be disposed coaxially with the rotary shaft of the ground contacting component.

In one embodiment of the present invention, the first connecting end may be connected to the rotary shaft of the ground contacting component.

In the present invention, the folding mechanism further includes: a limiting mechanism, one end of the limiting mechanism being connected to the first connecting end and the other end being connected to the second connecting end, to limit rotating ranges of the first movable member and the second movable member rotating relative to one another around the folding shaft as the pivot shaft.

In the present invention, the limiting mechanism includes:
an arc-shaped sliding groove, one end of the arc-shaped sliding groove being connected to the second connecting end and the other end being suspended above the ground contacting component, an radian value of the arc-shaped sliding groove being a preset threshold; and
a locking pin, one end of the locking pin being connected to the first connecting end and the other end being slidable along the arc-shaped sliding groove, the rotating ranges of the first movable member and the second movable member rotating relative to one another around the folding shaft as the pivot shaft.

In one embodiment of the present invention, both ends of the arc-shaped sliding groove may be respectively provided with a recess portion for fixing the locking pin after the first movable member slides to any end of the arc-shaped sliding groove, to keep a relative position between the first movable member and the second movable member fixed.

In one embodiment of the present invention, the first movable member may be a front fork structure, which may include at least one fork leg.

In one embodiment of the present invention, the second movable member may be a footboard. The second connecting end of the footboard may be a U-shaped end. Both ends of the folding shaft may be rotatably connected to two end portions of the U-shaped end respectively. When the first movable member and the second movable member rotate relative to one another around the folding shaft as the pivot shaft, the folding shaft and the second movable member rotate relative to one another.

The embodiments of the present invention provide a scooter, which may include the above folding mechanism.

It can be seen from the above technical solution that in the embodiments of the present invention, the first connecting end of the first movable member of the folding mechanism is connected to the ground contacting component, and the second connecting end of the second movable member is connected to the ground contacting component. The first movable member and the second movable member rotate relative to one another around the folding shaft as a pivot shaft to integrally unfold or fold the folding mechanism. In addition, during the relative rotation of the first movable member and the second movable member, the folding shaft passes through the ground contacting component, such that after the first movable member and the second movable member are folded toward one another, the entire folding mechanism occupies a smaller space.

### BRIEF DESCRIPTION OF DRAWINGS

In order to more clearly illustrate the embodiments of the present invention or the technical solutions in the related art, the drawings used in the description of the embodiments or the related art will be briefly described below. It is apparent that the drawings in the following description are only some embodiments in the embodiments of the present invention, and other drawings may be obtained from those of ordinary skill in the art according to these drawings.
FIG. 1A is a structural schematic diagram of a folding mechanism in the related art.
FIG. 1B is a state diagram of a folding mechanism in the related art after folding.
FIG. 1C is a state diagram of another folding mechanism in the related art after folding.
FIG. 2A is a structural schematic diagram of a folding mechanism according to the present invention.
FIG. 2B is a state diagram of the folding mechanism of FIG. 2A according to the present invention after folding. ;
FIG. 3A is a structural schematic diagram of a folding mechanism according to the present invention.
FIG. 3B is a state diagram of the folding mechanism of FIG. 3A according to the present invention after folding.
FIG. 3C is a structural schematic diagram of an arc-shaped sliding groove in the present invention.
FIG. 3D is a schematic diagram of an internal structure of a folding mechanism according to the present invention.
FIG. 3E, FIG. 3F and FIG. 3G are different state diagrams of the folding mechanism of FIG. 3D according to the present invention.

### DETAILED DESCRIPTION

In order to make the objectives, features and advantages of the embodiments of the present invention more obvious and easy to understand, the technical solutions in the embodiments of the present invention are clearly and completely described in the following with reference to the accompanying drawings in the embodiments of the present invention. It is apparent that the described embodiments are merely a part of the embodiments of the present invention, but not all of the embodiments. All other embodiments obtained by those of ordinary skill in the art based on the embodiments of the present invention without creative efforts fall within the scope of protection of the embodiments of the present invention.

The specific implementation of the embodiments of the present invention is further described below with reference to the accompanying drawings of the embodiments of the present invention.

In the following embodiments of the present invention, a first connecting end of a first movable member is connected to a ground contacting component, and a second connecting end of a second movable member is connected to the ground contacting component. The first movable member and the second movable member are configured to rotate relative to one another around the folding shaft as a pivot shaft, to integrally unfold or fold a folding mechanism. During the relative rotation of the first movable member and the second movable member, the folding shaft passes through the ground contacting component, such that after the first movable member and the second movable member are relatively folded, the entire folding mechanism occupies a smaller space.

Of course, it is not necessary to achieve all the above advantages at the same time to implement any technical solution of the embodiments of the present invention.

In order to make those skilled in the art better understand the technical solutions in the embodiments of the present invention, the technical solutions in the embodiments of the present invention will be clearly and completely described below with reference to the drawings in the embodiments of the present invention. It is apparent that the described embodiments are only a part of the embodiments of the present invention, not all of the embodiments. All other embodiments obtained by those of ordinary skill in the art based on the embodiments in the embodiments of the present invention should fall within the scope of protection of the embodiments of the present invention.

The specific implementation of the embodiments of the present invention is further described below with reference to the accompanying drawings of the embodiments of the present invention.

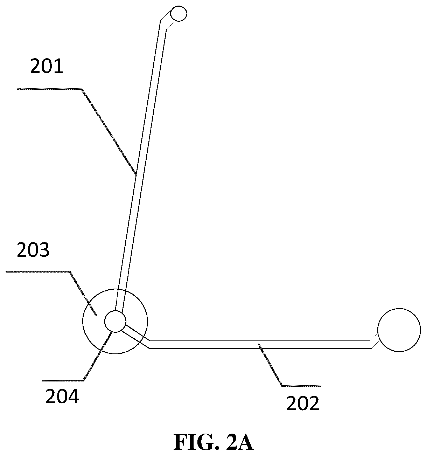

Referring to FIG. 2A, in an exemplary example of the present invention, the folding mechanism includes a first movable member 201, a second movable member 202, a ground contacting component 203, and a folding shaft 204.

The first movable member 201 is provided with a first connecting end (not shown in the figure). The first connecting end is connected to the ground contacting component 203.

The second movable member 202 is provided with a second connecting end (not shown in the figure). The second connecting end is connected to the ground contacting component 203. In an exemplary example, the folding shaft 204 laterally passes through the ground contacting component 203. When the first movable member 201 and the second movable member 202 are unfolded or folded, the first movable member 201 and the second movable member 202 rotate relative to one another around the folding shaft as a pivot shaft.

Further, in an exemplary application scenario, an axis of relative rotation of the first movable member 201 and the second movable member 202 coincides with an axis of the rotation of the ground contacting component 203. For example, the ground contacting component 203 is provided with a rotary shaft, and the folding shaft 204 of the first movable member 201 and the second movable member 202 is coaxial with the rotary shaft of the ground contacting component 203 to allow the coincidence of the above axes. Since the folding shaft 204 is coaxial with the rotary shaft of the ground contacting component 203, the design of the folding mechanism may be simplified in a specific application, the first movable member 201 and the second movable member 202 can be in close proximity to one another after folding, and thus the space occupied by the entire folding mechanism after folding is reduced, the stability of the folding mechanism is increased. The manner in which the folding shaft 204 and the rotary shaft of the ground contacting component 203 are coaxial is not specifically limited herein. For example, the folding shaft 203 may be nested in the rotary shaft to achieve coaxiality therebetween.

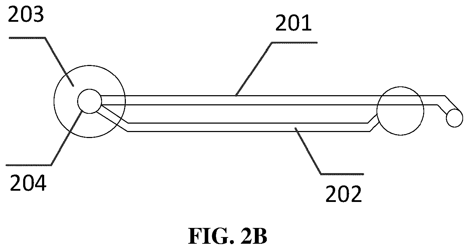

FIG. 2B is a state diagram of a folding mechanism according to the present invention after folding. As shown in FIG. 2B, the folding shaft 204 is disposed on the axis of the ground contacting component 203. When the folding mechanism needs to be folded, the first movable member 201 rotates relative to the second movable member 202 around the folding shaft 204 as a pivot shaft, and/or the second movable member 202 rotates relative to the first movable member 201 around the folding shaft 204 as a pivot shaft, so that the first movable member 201 may be in close proximity to the second movable member 202, and the entire folding mechanism occupies a small space after folding.

In an exemplary example, in an exemplary application scenario, the folding mechanism in the above embodiment or the folding structure in the following embodiment is applied to a scooter. The first movable member 201 is used as an upright rod of the scooter, which may be used as a hand control or a leg control. The second movable member 202 is used as a footboard of the scooter. The second connecting end of the footboard is a U-shaped end. Both ends of the folding shaft 204 are rotatably connected to two end portions of the U-shaped end, respectively. When the first movable member 201 and the second movable member 202 are unfolded or folded relative to one another, the folding shaft 204 and the second movable member 202 rotate relative to one another. At this time, the folding shaft 204 and the first movable member 201 are stationary relative to one another.

In an exemplary example, in an exemplary application scenario, the ground contacting component 203 is a wheel. Of course, in some other embodiments of the present invention, the ground contacting component 203 may be a track wheel or a non-circular annular structure; or the ground contacting component 203 may include at least one wheel. The above examples are intended to be illustrative of the general principles of the present invention and are not intended to limit the scope of the present invention.

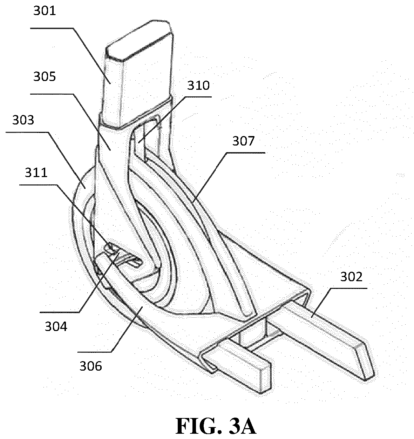

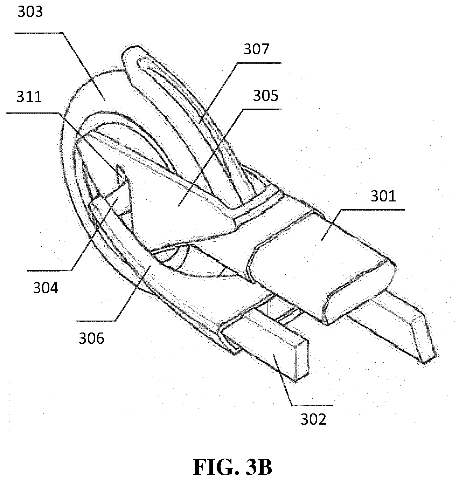

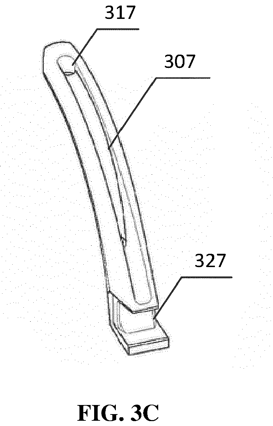

Another specific implementation of the present invention is further described below in conjunction with FIGS. 3A, 3B, and 3C.

FIG. 3A is a structural schematic diagram of a folding mechanism according to the present invention. As shown in FIG. 3A, the folding mechanism includes a first movable member 301, a second movable member 302, a ground contacting component 303 and a folding shaft 304. In the present embodiment, the first movable member 301, the second movable member 302, the ground contacting component 303, and the folding shaft 304 may be understood as a specific implementation of the first movable member 201, the second movable member 202, the ground contacting component 203, and the folding shaft 204 in the embodiments of FIGS. 2A and 2B.

The first movable member 301 is provided with a first connecting end 305. The first connecting end 305 is connected to a rotary shaft (not shown in the figure) of the ground contacting component 303. The first connecting end 305 may be similar to a front fork structure in the related art. In an exemplary example, the first connecting end 305 may be fastened to the rotary shaft by bolts (not shown in the figure).

The second movable member 302 is provided with a second connecting end 306. In an exemplary example, the second connecting end 306 is connected to the folding shaft 304. For example, the folding shaft 304 passes through a limiting hole 311 and is connected to the second connecting end 306. The second connection end 306 may be a similarly U-shaped structure.

In an exemplary application scenario of the present embodiment, the front fork structure includes at least one fork leg to implement the above connection.

In the claimed embodiments, a limiting mechanism is further included. The limiting mechanism includes: an arc-shaped sliding groove 307 and a locking pin 310. One end of the arc-shaped sliding groove 307 is connected to the second connecting end 306, and the other end is suspended above the ground contacting component 303. A radian value of the arc-shaped sliding groove 307 is a preset threshold, and a relative motion range between the first movable member 301 and the second movable member 302 is controlled. One end of the locking pin 310 is connected to the first connecting end 305, and the other end is slidable along the arc-shaped sliding groove 307, to limit a rotating ranges of the first movable member 301 and the second movable member 302 along the arc-shaped sliding groove 307 when rotating relative to one another around the folding shaft 304 as a pivot shaft. Therefore, one end of the entire limiting mechanism is connected to the first connecting end 305 and the other end is connected to the second connecting end 306, so as to limit a range of relative rotation of the first movable member 301 and the second movable member around the folding shaft 304.

FIG. 3B is a state diagram of the folding mechanism of FIG. 3A according to the present invention after folding. As shown in FIG. 3B, the first movable member 301 (and/or the second movable member 302) may rotate around the folding shaft 304 as a pivot shaft, such that the first movable member 301 is in close proximity to the second movable member 302 to make the entire folding mechanism occupy a small space.

FIG. 3C is a structural schematic diagram of the arc-shaped sliding groove 307 in the present invention. As shown in FIG. 3C, both ends of the arc-shaped sliding groove 307 are respectively provided with a recess portion 308 (the recess portion below the arc-shaped sliding groove 307 is not shown in the drawings) for fixing the locking pin 310 in FIG. 3A after the first movable member 301 rotates to any end of the arc-shaped sliding groove 307, to keep a relative position between the first movable member 301 and the second movable member 302 fixed.

In an exemplary example, the recess portion 308 may be an insertion hole for the locking pin.

In an exemplary example, one end of the arc-shaped sliding groove 307 is provided with a connecting mechanism 309 for fixing the arc-shaped sliding groove 307 to the second connecting end 306 in FIG. 3A and FIG. 3B.

In the present embodiment, a limiting mechanism is provided to limit rotating ranges of the first movable member 301 and the second movable member 302 rotating relative to one another. The limiting mechanism may be further configured to keep a relative position between the first movable member 301 and the second movable member 302 fixed after the first movable member 301 slides to any end of the arc-shaped sliding groove 307, so as to lock an unfolding or folding state of the first movable member 301 and the second movable member 302 to make the unfolding or folding state stable, thereby improving the practicability of the embodiments of the present invention.

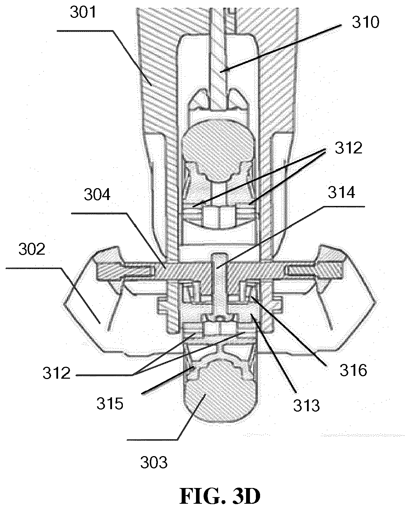

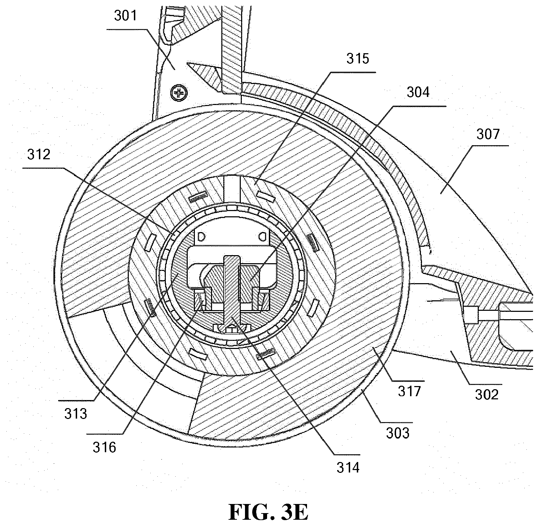

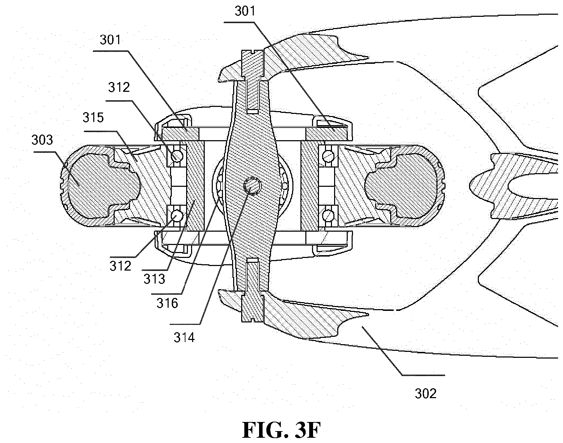

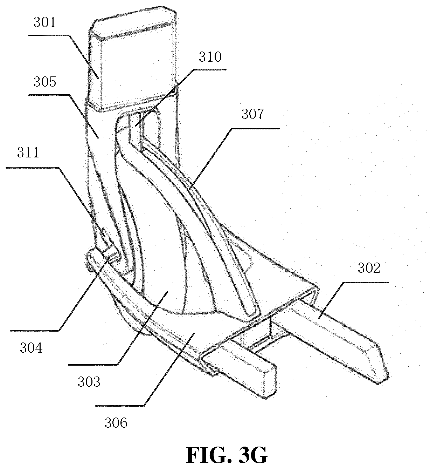

Another specific implementation of the present invention is further described below in conjunction with FIGS. 3D, 3E, 3F, and 3G.

FIG. 3D is a schematic diagram of an internal structure of a folding mechanism according to the present invention. FIG. 3E, FIG. 3F and FIG. 3G are different state diagrams of the folding mechanism of FIG. 3D according to the present invention.

As shown in FIGS. 3D, 3E, 3F and 3G, the folding mechanism includes a first movable member 301, a second movable member 302, a ground contacting component 303, a folding shaft 304 and a steering mechanism. In an exemplary example, the ground contacting component 303 is provided with a rotary shaft 313. The steering mechanism may be a steering bearing 316. An outer ring of the steering bearing 316 is connected to the rotary shaft 313 of the ground contacting component 303, and an inner ring of the steering bearing 316 is connected to the second movable member 302 by the folding shaft 304, so as to cause the rotary shaft 313 and the ground contacting component 303 turn around an axis of the steering bearing 316 when the ground contacting component 303 is steered during a steering process.

The above positional relationship or connection relationship between the steering bearing 316 and the rotary shaft 313 may reduce a friction coefficient during the relative movement of the folding shaft 304 and the rotary shaft 313. By providing the steering bearing 316, it can be ensured that the first movable member 301, the rotary shaft 313 and the ground contacting component 303 may be steered more smoothly.

One end of the steering bearing 316 is connected to the ground contacting component 303, and the other end is connected to the second connecting end 306, so as to steer the second movable member 302 when the ground contacting component 303 is steered.

In an exemplary example, the folding mechanism further includes: a fastening component 314. The fastening component 314 fastens the outer ring of the steering bearing 316 to the rotary shaft 313 of the ground contacting component 303, and connects the inner ring of the steering bearing 316 to the second movable member 302 by the folding shaft 304.

In an exemplary example, the fastening component 314 may be a bolt.

In an exemplary application scenario of the present embodiment, a steering action force applied to the first movable member 301 may drive the rotary shaft 313 of the ground contacting component 303 connected to the first movable member 301 to turn in left or right direction. Since the steering bearing 316 is disposed between the folding shaft 304 and the rotary shaft 313 of the ground contacting component 303, the rotary shaft 313 and the folding shaft 304 may turn in the left or right direction, that is, the ground contacting component 303 and the folding shaft 304 may turn in the left or right direction, thereby realizing the function of left or right steering the ground contacting component 303.

In the present embodiment, the folding mechanism further includes: a bearing 312 for the ground contacting component, which is configured to connect the rotary shaft 313 of the ground contacting component 303 to a hub 315 of the ground contacting component 303. The hub 315 is further provided with a tire 317. In an exemplary example, an inner ring of the bearing for the ground contacting component 312 is connected to the rotary shaft 313, and an outer ring of the bearing for the ground contacting component 312 is connected to the hub 315. The bearing 312 for the ground contacting component may be configured to support the rotary shaft 313, so that a frictional force generated when the hub 315 of the ground contacting component 303 rotates relative to the rotary shaft 313 may be reduced, and the practicability of the embodiments of the present invention may be improved.

When the first movable member 301 turns and drive the ground contacting component 303 to be steered, the ground contacting component 303 rotates around the axis of the steering bearing 316 as a rotary shaft, and meanwhile, the ground contacting component 303 and the folding shaft 304 turn in a left or right direction.

In the embodiments of the present invention, the rotary shaft 313 of the ground contacting component 303 is disposed horizontally, an axis of the steering bearing 316 is disposed vertically, the first connecting end 305 is provided with a limiting hole 311, the limiting hole 311 may be concentric with the ground contacting component 303, and the folding shaft 304 sequentially passes through the ground contacting component 303 and the limiting hole 311 and then is connected to the second connecting end 306. The limiting hole 311 may limit a steering range of the first connecting end 305 when the first connecting end 305 turns relative to the folding shaft 304 around the axis of the steering bearing 316 as a pivot shaft. As shown in FIG. 3G, when the folding shaft 304 is in contact with one side in a horizontal direction of the limiting hole 311, it indicates that the ground contacting component 303 has been turned to a maximum angle.

In an exemplary example, in the embodiments of the present invention, the limiting hole 311 is a flat limiting hole having a predetermined width.

A steering mechanism is disposed in the present embodiment to realize a wheel turning function in the present invention. In the present embodiment, the steering bearing is used as the steering mechanism, so that the frictional force in the turning process of the wheel is smaller, the use is more flexible, and the usability of the embodiments of the present invention is improved.

It is to be noted that the connection described in the above embodiments may be an actual physical connection between components, or there is an actual physical contact.

While the preferred embodiments of the present invention have been described, those skilled in the art may make additional changes and modifications to the embodiments once knowing a basic creativity concept. Therefore, the appended claims are intended to be interpreted as including the preferred embodiments and all the changes and modifications falling within the scope of the embodiments of the present invention. It is apparent that those skilled in the art may make various modifications and variations to the embodiments of the present invention without departing from the spirit and scope of the embodiments of the present invention. Thus, if such modifications and variations of the embodiments of the present invention fall within the scope of the appended claims of the embodiments of the present invention and their equivalents, the embodiments of the present invention are also intended to cover the modifications and variations.

Finally, it is to be noted that the above embodiments are only used to illustrate the technical solutions of the embodiments of the present application, and are not limited thereto. Although the embodiments of the present application have been described in detail with reference to the foregoing embodiments, those of ordinary skill in the art should understand that the technical solutions described in the foregoing embodiments may be modified, or some technical features may be equivalently replaced, but the modifications or replacements do not make the essence of the corresponding technical solutions depart from the scope of the technical solutions of various embodiments of the present application, defined by the appended claims.

## Claims

1. A folding mechanism, comprising: a first movable member (201, 301), a second movable member (202, 302), a ground contacting component (203, 303), a folding shaft (204, 304) passing through the ground contacting component (203, 303) and a limiting mechanism, wherein:
the first movable member (301) is provided with a first connecting end (305), and is connected to the ground contacting component (303) by the first connecting end (305);
the second movable member (302) is provided with a second connecting end (306), and is connected to the ground contacting component (303) by the second connecting end (306);
the first movable member (301) and the second movable member (302) are configured to rotate relative to one another around the folding shaft (304) as a pivot shaft, to unfold or fold the folding mechanism;
one end of the limiting mechanism is connected to the first connecting end (305) and the other end is connected to the second connecting end (306), to limit rotating ranges of the first movable member (301) and the second movable member (302) rotating relative to one another around the folding shaft (304) as the pivot shaft;
**characterized in that** the limiting mechanism comprises:
an arc-shaped sliding groove (307), one end of the arc-shaped sliding groove (307) being connected to the second connecting end (306) and the other end being suspended above the ground contacting component (303), an radian value of the arc-shaped sliding groove (307) being a preset threshold; and
a locking pin (310), one end of the locking pin (310) being connected to the first connecting end (305) and the other end extending into the arc-shaped sliding groove (307) and being slidable along the arc-shaped sliding groove (307), to limit the rotating ranges of the first movable member (301) and the second movable member (302) rotating relative to one another around the folding shaft (304) as the pivot shaft.

2. The folding mechanism of claim 1, wherein the ground contacting component (203, 303) is a wheel.

3. The folding mechanism of claim 1, further comprising:
a steering mechanism, which is connected to the ground contacting component (303) and the second connecting end (306) respectively, to steer the second movable member (302) when the ground contacting component (303) is steered.

4. The folding mechanism of claim 3, wherein the ground contacting component (303) is provided with a rotary shaft (313), the steering mechanism being a steering bearing (316), an outer ring of the steering bearing (316) being connected to the rotary shaft (313) of the ground contacting component (303) and an inner ring of the steering bearing (316) being connected to the second movable member (302) by the folding shaft (304), to steer the second movable member (302) when the ground contacting component (303) is steered.

5. The folding mechanism of claim 4, wherein the rotary shaft (313) of the ground contacting component (303) is disposed horizontally, an axis of the steering bearing (316) being disposed vertically, the first connecting end (305) being provided with a limiting hole (311), the folding shaft (304) sequentially passing through the ground contacting component (303) and the limiting hole (311) and then being connected to the second connecting end (306), the limiting hole (311) being configured to limit a steering range of the first connecting end when the first connecting end (305) turns relative to the folding shaft (304) around the axis of the steering bearing (316) as a pivot axis.

6. The folding mechanism of claim 5, wherein the limiting hole (311) is a flat limiting hole with a predetermined width.

7. The folding mechanism of claim 4, further comprising: a fastening component (314), connecting the outer ring of the steering bearing (316) to the rotary shaft (313) of the ground contacting component (303), and connecting the inner ring of the steering bearing (316) to the second movable member (302) by the folding shaft (304).

8. The folding mechanism of claim 1, wherein the folding shaft (304) is disposed coaxially with the rotary shaft (313) of the ground contacting component (303).

9. The mechanism of claim 1, wherein the first connecting end (305) is connected to the rotary shaft (313) of the ground contacting component (303).

10. The folding mechanism of claim 1, wherein both ends of the arc-shaped sliding groove (307) are respectively provided with a recess portion (308) for fixing the locking pin (310) after the first movable member (301) slides to any end of the arc-shaped sliding groove (307), to keep a relative position between the first movable member (301) and the second movable member (302) fixed.

11. The folding mechanism of any one of claims 1 to 10, wherein the first movable member (301) is a front fork structure comprising at least one fork leg.

12. The folding mechanism of claim 11, wherein the second movable member (302) is a footboard, the second connecting end (306) of the footboard being a U-shaped end, both ends of the folding shaft (204, 304) are rotatably connected to two end portions of the U-shaped end respectively, when the first movable member (201, 301) and the second movable member (302) rotate relative to one another around the folding shaft (304) as the pivot shaft, the folding shaft (304) and the second movable member (302) rotate relative to one another.

13. A scooter, comprising the folding mechanism of any one of claims 1 to 12.

## Patentansprüche

1. Klappmechanismus, der Folgendes umfasst: ein erstes bewegbares Element (201, 301), ein zweites bewegbares Element (202, 302), eine Bodenkontaktkomponente (203, 303), eine Klappwelle (204, 304), die durch die Bodenkontaktkomponente (203, 303) verläuft, und einen Begrenzungsmechanismus, wobei:
das erste bewegbare Element (301) mit einem ersten Verbindungsende (305) versehen und über das erste Verbindungsende (305) mit der Bodenkontaktkomponente (303) verbunden ist;
das zweite bewegbare Element (302) mit einem zweiten Verbindungsende (306) versehen und über das zweite Verbindungsende (306) mit der Bodenkontaktkomponente (303) verbunden ist;
das erste bewegbare Element (301) und das zweite bewegbare Element (302) dazu ausgelegt sind, sich als eine Schwenkwelle relativ zueinander um die Klappwelle (304) zu drehen, um den Klappmechanismus auf- oder einzuklappen;
ein Ende des Begrenzungsmechanismus mit dem ersten Verbindungsende (305) verbunden ist und das andere Ende mit dem zweiten Verbindungsende (306) verbunden ist, um Drehbereiche des ersten bewegbaren Elements (301) und des zweiten bewegbaren Elements (302), die sich als die Schwenkwelle relativ zueinander um die Klappwelle (304) drehen, zu begrenzen;
**dadurch gekennzeichnet, dass** der Begrenzungsmechanismus Folgendes umfasst:
eine bogenförmige Gleitnut (307), wobei ein Ende der bogenförmigen Gleitnut (307) mit dem zweiten Verbindungsende (306) verbunden ist und das andere Ende über der Bodenkontaktkomponente (303) aufgehängt ist, wobei ein Bogenmaßwert der bogenförmigen Gleitnut (307) ein voreingestellter Schwellwert ist; und
ein Blockierstift (310), wobei ein Ende des Blockierstifts (310) mit dem ersten Verbindungsende (305) verbunden ist und das andere Ende sich in die bogenförmige Gleitnut (307) erstreckt und entlang der bogenförmigen Gleitnut (307) gleitbar ist, um die Drehbereiche des ersten bewegbaren Elements (301) und des zweiten bewegbaren Elements (302), die sich als die Schwenkwelle relativ zueinander um die Klappwelle (304) drehen, zu begrenzen.

2. Klappmechanismus nach Anspruch 1, wobei die Bodenkontaktkomponente (203, 303) ein Rad ist.

3. Klappmechanismus nach Anspruch 1, der ferner Folgendes umfasst:
einen Lenkmechanismus, der mit der Bodenkontaktkomponente (303) bzw. dem zweiten Verbindungsende (306) verbunden ist, um das zweite bewegbare Element (302) zu lenken, wenn die Bodenkontaktkomponente (303) gelenkt wird.

4. Klappmechanismus nach Anspruch 3, wobei die Bodenkontaktkomponente (303) mit einer Drehwelle (313) versehen ist, wobei der Lenkmechanismus ein Lenklager (316) ist, wobei ein Außenring des Lenklagers (316) mit der Drehwelle (313) der Bodenkontaktkomponente (303) verbunden ist und ein Innenring des Lenklagers (316) über die Klappwelle (304) mit dem zweiten bewegbaren Element (302) verbunden ist, um das zweite bewegbare Element (302) zu lenken, wenn die Bodenkontaktkomponente (303) gelenkt wird.

5. Klappmechanismus nach Anspruch 4, wobei die Drehwelle (313) der Bodenkontaktkomponente (303) horizontal angeordnet ist, wobei eine Achse des Lenklagers (316) vertikal angeordnet ist, wobei das erste Verbindungsende (305) mit einem Begrenzungsloch (311) versehen ist, wobei die Klappwelle (304) nacheinander durch die Bodenkontaktkomponente (303) und das Begrenzungsloch (311) verläuft und dann mit dem zweiten Verbindungsende (306) verbunden ist, wobei das Begrenzungsloch (311) dazu ausgelegt ist, einen Lenkbereich des ersten Verbindungsendes zu begrenzen, wenn das erste Verbindungsende (305) als eine Schwenkachse relativ zur Klappwelle (304) um die Achse des Lenklagers (316) rotiert.

6. Klappmechanismus nach Anspruch 5, wobei das Begrenzungsloch (311) ein flaches Begrenzungsloch mit einer vorbestimmten Breite ist.

7. Klappmechanismus nach Anspruch 4, der ferner Folgendes umfasst: eine Befestigungskomponente (314), die den Außenring des Lenklagers (316) mit der Drehwelle (313) der Bodenkontaktkomponente (303) verbindet und den Innenring des Lenklagers (316) über die Klappwelle (304) mit dem zweiten bewegbaren Element (302) verbindet.

8. Klappmechanismus nach Anspruch 1, wobei die Klappwelle (304) koaxial zur Drehwelle (313) der Bodenkontaktkomponente (303) angeordnet ist.

9. Mechanismus nach Anspruch 1, wobei das erste Verbindungsende (305) mit der Drehwelle (313) der Bodenkontaktkomponente (303) verbunden ist.

10. Klappmechanismus nach Anspruch 1, wobei zum Fixieren des Blockierstifts (310), nachdem das erste bewegbare Element (301) zu einem Ende der bogenförmigen Gleitnut (307) geglitten ist, um eine relative Position zwischen dem ersten bewegbaren Element (301) und dem zweiten bewegbaren Element (302) fixiert zu halten, beide Enden der bogenförmigen Gleitnut (307) jeweils mit einem Ausnehmungsabschnitt (308) versehen sind.

11. Klappmechanismus nach einem der Ansprüche 1 bis 10, wobei das erste bewegbare Element (301) eine vordere Gabelstruktur ist, die mindestens ein Gabelbein umfasst.

12. Klappmechanismus nach Anspruch 11, wobei das zweite bewegbare Element (302) ein Trittbrett ist, wobei das zweite Verbindungsende (306) des Trittbretts ein U-förmiges Ende ist, beide Enden der Klappwelle (204, 304) jeweils mit zwei Endabschnitten des U-förmigen Endes drehbar verbunden sind, wenn sich das erste bewegbare Element (201, 301) und das zweite bewegbare Element (302) als die Schwenkwelle relativ zueinander um die Klappwelle (304) drehen, die Klappwelle (304) und das zweite bewegbare Element (302) sich relativ zueinander drehen.

13. Roller, der den Klappmechanismus nach einem der Ansprüche 1 bis 12 umfasst.

## Revendications

1. Mécanisme de pliage comprenant : un premier élément mobile (201, 301), un second élément mobile (202, 302), un composant de contact avec le sol (203, 303), un arbre de pliage (204, 304) passant par le composant de contact avec le sol (203, 303) et un mécanisme de limitation, dans lequel :
le premier élément mobile (301) est prévu avec une première extrémité de raccordement (305) et est raccordé au composant de contact avec le sol (303) par la première extrémité de raccordement (305) ;
le second élément mobile (302) est prévu avec une seconde extrémité de raccordement (306) et est raccordé au composant de contact avec le sol (303) par la seconde extrémité de raccordement (306) ;
le premier élément mobile (301) et le second élément mobile (302) sont configurés pour tourner l'un par rapport à l'autre autour de l'arbre de pliage (304) en tant qu'arbre de pivot, pour déplier ou plier le mécanisme de pliage ;
une extrémité du mécanisme de limitation est raccordée à la première extrémité de raccordement (305) et l'autre extrémité est raccordée à la seconde extrémité de raccordement (306), pour limiter les plages de rotation du premier élément mobile (301) et du second élément mobile (302) tournant l'un par rapport à l'autre autour de l'arbre de pliage (304) en tant qu'arbre de pivot ;
**caractérisé en ce que** le mécanisme de limitation comprend :
une rainure de coulissement en forme d'arc (307), une extrémité de la rainure de coulissement en forme d'arc (307) étant raccordée à la seconde extrémité de raccordement (306) et l'autre extrémité étant suspendue au-dessus du composant de contact avec le sol (303), une valeur de radian de la rainure de coulissement en forme d'arc (307) étant un seuil prédéterminé ; et
une goupille de verrouillage (310), une extrémité de la goupille de verrouillage (310) étant raccordée à la première extrémité de raccordement (305) et l'autre extrémité s'étendant dans la rainure de coulissement en forme d'arc (307) et pouvant coulisser le long de la rainure de coulissement en forme d'arc (307), afin de limiter les plages de rotation du premier élément mobile (301) et du second élément mobile (302) tournant l'un par rapport à l'autre autour de l'arbre de pliage (304) en tant qu'arbre de pivot.

2. Mécanisme de pliage selon la revendication 1, dans lequel le composant de contact avec le sol (203, 303) est une roue.

3. Mécanisme de pliage selon la revendication 1, comprenant en outre :
un mécanisme de direction, qui est raccordé au composant de contact avec le sol (303) et au second composant de contact avec le sol (306) respectivement, pour diriger le second élément mobile (302) lorsque l'élément de contact avec le sol (303) est dirigé.

4. Mécanisme de pliage selon la revendication 3, dans lequel le composant de contact avec le sol (303) est prévu avec un arbre de rotation (313), le mécanisme de direction étant un palier de direction (316), une bague externe du palier de direction (316) étant raccordée à l'arbre de rotation (313) du composant de contact avec le sol (303) et une bague interne du palier de direction (316) étant raccordée au second élément mobile (302) par l'arbre de pliage (304), pour diriger le second élément mobile (302) lorsque le composant de contact avec le sol (303) est dirigé.

5. Mécanisme de pliage selon la revendication 4, dans lequel l'arbre de rotation (313) du composant de contact avec le sol (303) est disposé horizontalement, un axe du palier de direction (316) étant disposé verticalement, la première extrémité de raccordement (305) étant prévue avec un trou de limitation (311), l'arbre de pliage (304) passant, de manière séquentielle, par le composant de contact avec le sol (303) et le trou de limitation (311) et étant ensuite raccordé à la seconde extrémité de raccordement (306), le trou de limitation (311) étant configuré pour limiter une plage de direction de la première extrémité de raccordement lorsque la première extrémité de raccordement (305) tourne par rapport à l'arbre de pliage (304) autour de l'axe de palier de direction (316) en tant qu'axe de pivot.

6. Mécanisme de pliage selon la revendication 5, dans lequel le trou de limitation (311) est un trou de limitation plat avec une largeur prédéterminée.

7. Mécanisme de pliage selon la revendication 4, comprenant en outre : un composant de fixation (314) raccordant la bague externe du palier de direction (316) à l'arbre de rotation (313) du composant de contact avec le sol (303) et raccordant la bague interne du palier de direction (316) au second élément mobile (302) par l'arbre de pliage (304).

8. Mécanisme de pliage selon la revendication 1, dans lequel l'arbre de pliage (304) est disposé de manière coaxiale avec l'arbre de rotation (313) du composant de contact avec le sol (303).

9. Mécanisme de pliage selon la revendication 1, dans lequel la première extrémité de raccordement (305) est raccordée à l'arbre de rotation (313) du composant de contact avec le sol (303).

10. Mécanisme de pliage selon la revendication 1, dans lequel les deux extrémités de la rainure de coulissement en forme d'arc (307) sont respectivement prévues avec une partie d'évidement (308) pour fixer la goupille de verrouillage (310) après que le premier élément mobile (301) a coulissé vers l'une quelconque des extrémités de la rainure de coulissement en forme d'arc (307), pour maintenir une position relative entre le premier élément mobile (301) et le second élément mobile (302), fixe.

11. Mécanisme de pliage selon l'une quelconque des revendications 1 à 10, dans lequel le premier élément mobile (301) est une structure de fourche avant comprenant au moins une patte de fourche.

12. Mécanisme de pliage selon la revendication 11, dans lequel le second élément mobile (302) est un repose-pied, la seconde extrémité de raccordement (306) du repose-pied étant une extrémité en forme de U, les deux extrémités de l'arbre de pliage (204, 304) sont respectivement raccordées, de manière rotative, aux deux parties d'extrémité de l'extrémité en forme de U, lorsque le premier élément mobile (201, 301) et le second élément mobile (302) tournent l'un par rapport à l'autre autour de l'arbre de pliage (304) en tant qu'arbre de pivot, l'arbre de pliage (304) et le second élément mobile (302) tournent l'un par rapport à l'autre.

13. Trottinette comprenant le mécanisme de pliage selon l'une quelconque des revendications 1 à 12.
